(19) Europäisches Patentamt
European Patent Office
Office européen des brevets

(11) Publication number: **0 130 732 B1**

(12) **EUROPEAN PATENT SPECIFICATION**

(45) Date of publication of patent specification: **14.01.87**

(51) Int. Cl.[4]: **E 21 B 43/22**

(21) Application number: **84304137.7**

(22) Date of filing: **19.06.84**

(54) **Anionic polymer composition and its use for stimulating a subterranean formation.**

(30) Priority: **22.06.83 US 506759**
**22.06.83 US 506580**

(43) Date of publication of application:
**09.01.85 Bulletin 85/02**

(45) Publication of the grant of the patent:
**14.01.87 Bulletin 87/03**

(84) Designated Contracting States:
**DE FR GB IT NL**

(56) References cited:
**DE-A-3 131 461**
**GB-A-2 091 320**
**GB-A-2 106 958**
**US-A-3 779 316**
**US-A-3 830 302**
**US-A-3 915 230**

(73) Proprietor: **HALLIBURTON COMPANY**
**P.O. Drawer 1431**
**Duncan Oklahoma 73536 (US)**

(72) Inventor: **Almond, Stephen William**
**Route 5, Box 591**
**Duncan, OK 73533 (US)**
Inventor: **Scott, Edith**
**814 Park Street**
**Duncan, OK 73533 (US)**

(74) Representative: **Wain, Christopher Paul et al**
**A.A. THORNTON & CO. Northumberland House**
**303-306 High Holborn**
**London WC1V 7LE (GB)**

EP 0 130 732 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a water soluble anionic polymer composition and to its use in stimulating a subterranean formation.

Oil and gas accumulations usually occur in porous and permeable underground rock formations. In order to produce the oil and gas contained in a formation, a well is drilled into the formation. The oil and gas, in many instances, are contained in the pore spaces of the formation, and are hydraulically connected by means of permeability or interconnecting channels between the pore spaces. After the well is drilled into the formation, oil and gas are displaced into the well bore by means of fluid expansion, natural and artificial fluid displacement, gravity drainage, etc. These various processes may work together or independently to drive the hydrocarbons into the well bore through existing flow channels. If production of the well is impaired by insufficient channels leading into the well bore, the formation, in many instances, is treated to increase the ability of the formation rock to conduct fluid into the well bore.

Acidizing of a subterranean formation penetrated by a well bore has been widely employed for increasing the production of fluids, e.g. crude oil, natural gas, etc., from the formation. The usual technique of acidizing a subterranean formation comprises introducing a nonoxidizing acid into the well, under sufficient pressure to force the acid into the formation where it reacts with acid soluble components of the formation. The technique is not limited to formations of high acid solubility such as limestone, dolomite, etc. but is also applicable to other types of formations such as sandstone containing streaks or striations of acid soluble components such as ferrous carbonates.

During the acid treating operation, passageways for fluid flow are created in the formation, or existing passageways therein are enlarged, thus stimulating the production of fluids from the formation. Acidizing operations wherein the acid is injected into the formation at a pressure or rate insufficient to create cracks or fractures in the formation, are usually referred to as matrix acidizing.

Hydraulic fracturing is also widely used for stimulating petroleum producing subterranean formations, and comprises the injection of a suitable fracturing fluid down a well bore pentrating a formation and into the formation under sufficient pressure to overcome the pressure exerted by the overburden. This results in creating a crack or fracture in the formation to provide a passageway which facilitates the flow of fluids through the formation and into the well. When the pressure of the fracturing fluid is reduced, a propping agent present in the fracturing fluid prevents the complete closure of the fracture. Combination fracture-acidizing processes are well known in the art.

Increasing the viscosity of the fluid used in acidizing or fracturing of a formation has several benefits. In acidizing and/or fracture acidizing of subterranean formations, gelled fluids are useful in preventing the acid from becoming prematurely spent and inactive. In addition, gelling of the acid solutions enables the development of wider fractures so that the live acid can be forced further into the formation from the well bore. Furthermore, increasing the viscosities of the fluids permits better fluid loss control.

Water soluble polymers have been used in the past to increase the viscosity of fluids used in acidizing and fracturing processes. Many water soluble polymers, however, exhibit one common problem which can cause much difficulty to the user when the polymers are to be dissolved in an aqueous solution. This problem is their pour dispersibility in the water as a result of which long periods of time are often necessary to disperse the polymer adequately. The individual particles tend to agglomerate when the polymer is mixed with water, because rapid hydration takes place over the surface of the agglomerated aggregates to form gel-coated lumps, the interiors of which remain substantially dry. These lumps are then extremely difficult to disperse. This effect is aggravated by the fact that some polymers have a tendency to float on the surface of the water, thus allowing partially dissolved particles to agglomerate into large lumps or masses. In order to break up the lumps or masses, and facilitate rapid dispersion and solution of the polymers, it is necessary that the polymers be subjected to very vigorous agitation for relatively long periods of time.

One technique which has been proposed previously to prevent the agglomeration of water soluble polymers has been to treat the polymers with crosslinking agents, especially by crosslinking them with glyoxal. The crosslinking renders the polymers temporarily or partially insoluble to water. This method, however, has not been particularly effective on polymers which contain carboxyl groups and ionically charged polymers.

We have now found that by using certain water soluble anionic polymers, the above problems can be reduced or overcome by mixing therewith certain cationic or amphoteric polymers. In this way, the water soluble anionic polymers are rendered more readily dispersible in water.

According to the present invention, there is provided a water soluble anionic polymer composition comprising:

(a) at least one anionic polymer having a molecular weight sufficient to thicken water and selected from gum karaya, gum tragacanth, gum ghatti, gum acacia, psyllium, carrageenin, carboxyalkyl guar, carboxyalkyl hydroxyalkyl guar, carboxyalkyl cellulose, carboxyalkyl hydroxyalkyl cellulose, the said alkyl groups having from 1 to about 3 carbon atoms, polyacrylamide, polyacrylate, acrylamide-acrylate copolymers and xanthan gum: and

(b) at least one cationic or amphoteric polymer selected from poly(diallyldimethylammonium chloride) and polymers having repeating monomer units of one or more of the following formulae I, II and III:

I

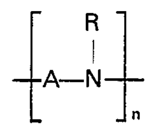

wherein

R is hydrogen or an alkyl of 1 to about 3 carbon atoms;

A is alkylene having 2 to 4 carbon atoms or a hydroxyalkylene having 2 to 4 carbon atoms;

n is an integer equal to the number of monomer units of said polymer required to give the polymer a molecular weight of at least 1,000;

II

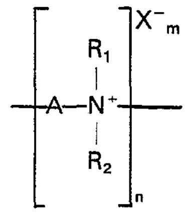

wherein

$R_1$ and $R_2$ are independently hydrogen or an alkyl having from 1 to about 3 carbon atoms;

A is alkylene having 2 to 4 carbon atoms or a hydroxyalkylene having 2 to 4 carbon atoms;

X is halogen, sulfate, hydroxyl, or methyl sulfate;

m is an integer equal to the number of anions required to maintain electronic neutrality; and,

n is an integer equal to the number of monomer units of said polymer required to give the polymer a molecular weight of at least 1,000;

III

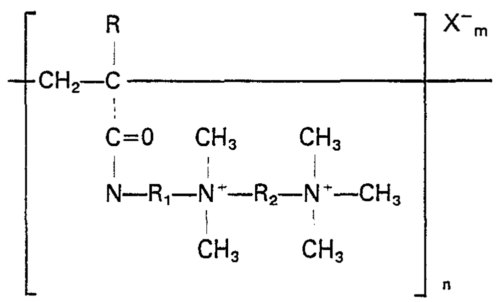

wherein

R is hydrogen or methyl;

$R_1$ is alkylene having from about 2 to about 5 carbon atoms;

$R_2$ is unsubstituted alkylene having from about 2 to about 6 carbon atoms, or substituted alkylene having from about 2 to about 6 carbon atoms and containing a hydroxyl group or from 1 to about 3 ether groups;

X is an anion selected from chlorine, bromine, iodine, sulfate, hydroxyl, and methyl sulfate;

m is an integer equal to the number of anions required to maintain electronic neutrality; and,

n is an integer equal to the number of monomer units of said polymer required to give the polymer a molecular weight of at least 1,000.

When such compositions contain more than about 25% of the cationic or amphoteric polymer, based on the weight of anionic polymer, then a halide salt is also included to hydrate the anionic polymer(s).

The invention also includes the use of the above compositions to thicken a polar, such as an aqueous liquid, for use, for example, in the treatment of a subterranean formation.

The compositions of the invention can be premixed in solution ready for use, as a concentrate, or can be made up dry. Alternatively, they can be formed *in situ* in the aqueous liquid by adding the constituents thereto.

Examples of the carboxyalkyl guars that can be used as anionic polymers in the composition of the invention are carboxymethyl guar and carboxyethyl guar. Suitable carboxyalkyl hydroxyalkyl guars include carboxymethyl hydroxyethyl guar, carboxyethyl hydroxyethyl guar, carboxymethyl hydroxypropyl guar, and carboxyethyl hydroxypropyl guar. Examples of carboxyalkyl cellulose are carboxymethyl cellulose and carboxyethyl cellulose. Examples of carboxyalkyl hydroxyalkyl cellulose are carboxymethyl hydroxypropyl cellulose, carboxymethyl hydroxyethyl cellulose, carboxyethyl hydroxypropyl cellulose, and carboxyethyl hydroxyethyl cellulose. The preferred anionic polymer in carrying out the invention is carboxymethyl hydroxyethyl cellulose.

The anionic polymers used in the invention must have a molecular weight sufficient to increase the viscosity of an aqueous liquid when they are added to the liquid.

Generally, the amount of cationic or amphoteric polymer in the compositions will be from about 1.0 to about 75 percent by weight of the anionic polymer. By amphoteric, we mean that the polymer has a cationic character when the pH of the polymer is below the $pK_a$ value of the polymer. Generally, a pH of about 8 to about 10 is sufficient to produce the cationic character of the amphoteric polymer. The cationic or amphoteric polymer causes the anionic polymer to become more readily dispersible in an aqueous liquid.

After the anionic and cationic or amphoteric polymers have been added to the polar liquid to form a mixture, the mixture containing the polymers can be dried, concentrated such as by filtration to form a damp solid, or kept in the mixture.

Optionally, the anionic polymers and the cationic or amphoteric polymer may be blended together in a dry state and subsequently added to the polar liquid.

In instances where the cationic or amphoteric polymer is added to the anionic polymer in an amount of from about 1 to about 25 percent by weight of anionic polymer, it is not necessary to add the salt to hydrate the anionic polymer although the salt can be used for faster hydration of the anionic polymer.

When the cationic or amphoteric polymer is added to the anionic polymer in amounts greater than 25 percent by weight of the anionic polymer, it is necessary to add a salt to the anionic and cationic or amphoteric polymers. Since the salt causes the polymers to hydrate, it is preferred that the salt be added to the dried material rather than to the polymers in a damp solid or slurry. Adding the salt to the polymers in a damp solid or slurry can cause the polymer to set up or harden and make use of the polymers difficult.

Polymers of the above general formula I and II and methods of their preparation are well known in the art. Examples of these polymers include poly(ethyleneamine), poly(propyleneamine), poly(ethyl-1-N-methylamine), the quaternized salts of these polymers, poly(ethyl-1,1-N-methylammonium chloride), poly(2-hydroxypropyl-1,1-N-dimethylammonium chloride), and poly(diallyldimethylammonium chloride).

One method of preparing poly(methacrylamido-4,4,8,8-tetramethyl-4,8-diaza-6-hydroxypropyltrimethylammonium chloride), a polymer of general formula III, comprises preparing the monomer by reacting 3-chloro-2-hydroxypropyltrimethylammonium chloride with N',N'-dimethyl-amino-N-propyl-methacrylamide. When this reaction is carried out, poly(methacrylamido-4,4,8,8-tetramethyl-4,8-diaza-6-hydroxynonamethylene dichloride) (PMTDHD) is produced.

PMTDHD is readily polymerizable. Any known polymerization initiator of the free radical type may be used. Examples of suitable polymerization initiators include L-butyl hydroperoxide, ammonium persulfate, and alkali metal persulfates. The monomers may be polymerized in either a water solution or an emulsion (water-in-oil) process.

The preferred cationic or amphoteric polymer for carrying out the invention is poly-2-hydroxypropyl-1,1-N-dimethylammonium chloride.

Furthermore, crosslinked polymers of general formula I, II, and III can be used in the practice of the invention. In general, the crosslinked polymers can be prepared by adding a crosslinking agent to the polymer. Examples of suitable crosslinking agents include divinylbenzene, divinylether, and the like. The crosslinking agents can be used in small amounts, e.g. up to one percent by weight of the polymer.

The polymer that is being made more dispersible in water, namely the anionic polymer, generally must be of such molecular weight that the polymer increases the viscosity of an aqueous liquid when incorporated into the aqueous liquid. To this polymer, is added a dispersing polymer, namely the cationic or amphoteric polymer. The cationic or amphoteric polymer must have a molecular weight of at least 1,000. When the method is carried out, an anionic polymer, which is very dispersible in an aqueous liquid, is achieved. The anionic polymer is particularly useful in stimulating a subterranean formation.

One method of preparing the dispersible anionic polymers is carried out by adding the anionic polymer and the cationic or amphoteric polymer to a polar liquid which should be present in an amount to allow sufficient mixing of the polymers. Generally, any polar liquid can be used for this purpose. Examples of suitable polar liquids include water, methanol, ethanol, propanol, isopropanol, and mixtures thereof. Preferably, methanol or isopropanol is utilized as lesser amounts of the cationic or amphoteric polymer are required when using either of these liquids. After the polymers are added to the polar liquid, the polymers are mixed to form a mixture. At this point, the mixture containing the polymers can be dried, concentrated such as by filtration to form a damp solid or kept in the mixture.

In those instances where the cationic or amphoteric polymer is added to the anionic polymer in an amount from about greater than 25 percent by weight of the anionic polymer to about 75 percent by weight of the anionic polymer, it is necessary to add the salt to hydrate the anionic polymer.

In those instances where a salt is utilized in the method of the invention, the salt utilized is selected from the group consisting of alkali metal halides, alkaline earth metal halides, zinc halides, ammonium halides and mixtures thereof. Examples of suitable salts include sodium chloride, potassium chloride, sodium fluoride, sodium bromide, calcium chloride, barium chloride, lithium chloride, and ammonium chloride. The preferred salt is potassium chloride. Since the salt causes the polymers to hydrate, it is preferred that the salt be added to the dried material rather than to the polymers in a damp solid or mixture. Adding the salt to the polymers in a damp solid or mixture can cause the polymer to set up or harden and make the use of the polymer difficult. Therefore when the damp solid or mixture is utilized, it is preferred that the damp solid or mixture be added to the aqueous liquid prior to the addition of the salt to the damp

solid or mixture. Optionally, the salt can be first added to the aqueous liquid followed by the addition of the damp solid or mixture containing the polymers.

When salts are utilized to carry out the method of the invention, the amount of the salts used will vary over a wide range depending, for example, on the anionic and cationic or amphoteric polymers utilized and the concentration of the anionic and cationic or amphoteric polymers. As a general rule however, the amount of salt used in hydrating the anionic polymer will be in the range of from about 0.25 percent to about 50.0 percent, preferably 0.5 percent to about 10 percent by weight of the anionic polymer and cationic or amphoteric polymer.

The amounts of the anionic and cationic or amphoteric polymers that are utilized to carry out the invention will vary over a great range. Generally, however, the amount of the cationic or amphoteric polymer utilized will be about 1.0 to about 75.0 weight percent of the anionic polymer and more preferably from 2.0 to about 50.0 weight percent of the anionic polymer. The amounts of cationic and anionic polymers most effective with any particular system can be easily ascertained by conducting simple preliminary trials.

When the cationic or amphoteric polymer is added to the anionic polymer in an amount of from about 1 to about 25 percent by weight of the anionic polymer, and no salt is utilized, the resulting water dispersible anionic polymer will hydrate slower than if salt were utilized. In those instances where rapid hydration is preferred, a salt can be added to the mixture containing the anionic polymer and the cationic or amphoteric polymer. When the cationic or amphoteric polymer is utilized in an amount greater than 25 percent by weight of the anionic polymer, the salt is required for proper hydration of the anionic polymer.

The anionic polymers of the invention can be utilized in either fracturing or acidizing of a subterranean formation. In this application, the anionic polymer which is rendered more dispersible in water is prepared by adding the anionic and cationic or amphoteric polymers to a polar liquid to form a mixture. The mixture then can be concentrated, dried, or kept as a mixture. If the mixture is dried, the salt, if utilized, can be incorporated into the dry material. Since the salt causes the polymer to hydrate, it is preferred that when the mixture or damp solid is utilized, that the mixture or damp solid be added to the aqueous liquid prior to the addition of the salt. Optionally, the salt can be first added to the aqueous liquid followed by the addition of the damp solid or mixture containing the polymers. If the aqueous liquid is used in an acidizing operation, the acid is preferably added at this stage to the aqueous liquid containing the polymers. Any conventional mixing apparatus can be employed for this purpose. The amount of anionic and cationic or amphoteric polymers used in the aqueous fluid used for stimulating the subterranean formation will vary widely depending upon the properties desired in the composition which is used to stimulate the subterranean formation. In general, the amount of polymers used will vary but will generally be in the range of from about 0.1 to about 1 percent by weight of aqueous fluid. There is, however, really no limit on the amount of polymer which can be used as long as the aqueous treating fluid can be pumped in accordance for the methods of the invention.

When the polymers are to be utilized in acidizing a subterranean formation, any acid which is compatible with the polymers and is effective in increasing the flow of hydrocarbons through the formation and into the well, can be included with the polymers. Thus, under proper conditions examples of such acids include inorganic acids, such as hydrochloric acid, hydrofluoric acid, phosphoric acid, nitric acid, and sulfuric acid; organic acids having 1 to 4 carbon atoms such as formic acid, acetic acid, propionic acid, butyric acid, and mixtures thereof and combinations of organic and inorganic acids. Nonoxidizing acids are preferred and hydrochloric acid is the most preferred acid. The concentration and strength of the acid will depend upon the type of acid, the type of formation being treated, the results desired, and the particular treating operation. Generally speaking, the concentration of the acid will vary over a wide range and will usually be from about 0.4 to about 60 weight percent depending on the type of acid with concentrations within the range of 10 to 50 weight percent usually preferred based upon the total weight of the acidic composition. When an inorganic acid such as hydrochloric acid is utilized, the amount of hydrochloric acid will usually fall within the range of from about 0.4 to about 35, more preferably at least about 10 weight percent based on the total weight of the gelled acidic composition. Amounts within the range of from about 10 to about 30 weight percent will frequently be practical amounts to use.

The acid composition used to stimulate the subterranean formation may also contain other ingredients such as corrosion inhibitors, emulsifying agents, sequestering agents, friction reducers, propping agents, and other ingredients well known in the art.

The acidizing and/or fracturing operations are utilized by any suitable method and these methods are well known in the art. For instance, when the treated polymer is utilized in the acidizing fluid, the fluid is introduced into the formation containing the calcereous deposits via an injection into the well using any convenient method as understood in the acidizing art. After the injection of the fluid into the deposits, the fluid attacks the deposits, with such usually being completed within three to four hours of the injection, and thereafter the spent fluid may be withdrawn by pumping, swabbing, or allowing the well to flow back. Additionally, when the well is a disposal or injection well, the acidizing fluid can be introduced into the well in any convenient manner as understood in this art with the acid contacting the structures or strata to be treated and thereafter the spent fluid is dispersed into the structures or strata by a displacing fluid, usually water.

When the polymers are utilized in fracturing of the formation, the fluid containing the polymer is

injected into the formation at such pressure that the formation is fractured. Thereafter, the increased permeability of the formation, the well is prepared for return of operation and then allowed to produce hydrocarbons. Furthermore, acidizing can be combined with the fracturing operation. The use of the polymer in the above stated manner has been found to be very effective in treating subterranean formations.

The following Examples of specific embodiments of the invention are given by way of illustration only.

Example I

An aliquot of a cationic polymer selected from Table I, and 0.5 g of an anionic polymer selected from Table II, were added to 10 ml. of methanol to form a mixture. The mixture was added to 90 ml. of deionized water. The hydration rate was monitored at 1 minute, 2 minutes, 3 minutes, 4 minutes, 5 minutes, and 30 minutes after the addition of the salt with a Fann Model 35 viscometer at 300 rpm. and 76°F (24.4°C). The viscometer was equipped with a No. 1 spring and fitted with a standard bob and sleeve. The results of these tests are shown in Table III.

TABLE I

Code for anionic polymers used in the Examples

| Chemical code | Polymer | Common name | Manufacturer |
|---|---|---|---|
| A1 | Carboxymethyl guar[a] | CMG | — |
| A2 | Carboxymethylhydroxypropyl guar[b] | CMHPG | — |
| A3 | Carboxymethylcellulose[c] | CMC 9H4 | Hercules, Inc. |
| A4 | Carboxymethylhydroxyethylcellulose[d] | CMHEC 420H | Hercules, Inc. |
| A5 | Carboxyethylhydroxyethylcellulose[e] | CEHEC | — |
| A6 | Polyacrylamide (35% hydrolyzed) | ALLOMER 120 | Allied Colloids |
| A7 | Xanthan gum | XANCO FRAC | Kelco Company |

[a] The carboxymethyl guar had a carboxymethyl degree of substitution (D.S.) of 0.6.

[b] The carboxymethylhydroxypropyl guar had a carboxymethyl degree of substitution (D.S.) of 0.3 and a hydroxypropyl molar substitution (M.S.) of 0.6.

[c] The carboxymethylcellulose had a carboxymethyl degree of substitution (D.S.) of 0.9.

[d] The carboxymethylhydroxyethylcellulose had a carboxymethyl degree of substitution (D.S.) of 0.4 and a hydroxyethyl molar substitution (M.S.) of 2.0.

[e] The carboxymethylhydroxyethylcellulose had a carboxyethyl degree of substitution (D.S.) of 0.5 and a hydroxyethyl molar substitution (M.S.) of 2.0.

TABLE II

Code for Amphoteric or cationic polymers used in the Examples

| Chemical code | Polymer | Common name | Manufacturer |
|---|---|---|---|
| C1 | Polyethyleneamine resin | P-600 | Cordova Chemical Co. |
| C2 | Poly(2-hydroxypropyl-1,1-N-dimethyl-ammonium chloride) | Nalw 108 | Nalco Chemical Co. |
| C3 | Poly(diallyldimethylammonium chloride) | MERQUAT® 100 | Calgon Corp. |
| C4 | Poly(methacrylamido-4,4,8,8-tetramethyl-4,8-diaza-6-hydroxymonomethylene dichloride) | — | Celanese Corp. |

TABLE III

| Test No. | Polymer dispersed (anionic) | | Dispersing polymer (cationic) | | Salt | | Solution apparent viscosity (centipoise @ 511 $sec^{-1}$) | | | | | |
|---|---|---|---|---|---|---|---|---|---|---|---|---|
| | Code | Conc. (PPM) | Code | Conc. (PPM) | Type | Conc. (PPM) | 1 min | 2 min | 3 min | 4 min | 5 min | 30 min |
| 1 | A1 | 5000 | — | — | — | — | 37 | 37 | 37 | 38 | 38 | 38 |
| 2 | A1 | 5000 | — | — | KCl | 20000 | 22 | 27 | 29 | 30 | 31 | 33 |
| 3 | A1 | 5000 | C1 | 500 | — | — | 29 | 32 | 33 | 33 | 34 | 35 |
| 4 | A1 | 5000 | C1 | 1500 | — | — | — | 4 | 6.5 | 8 | 10 | 13 |
| 5 | A1 | 5000 | C1 | 1500 | KCl | 20000 | 19 | 22 | 23 | 24 | 24 | 26 |
| 6 | A1 | 5000 | C2 | 200 | — | — | 4 | 7 | 13 | 19 | 23 | 39 |
| 7 | A1 | 5000 | C2 | 800 | — | — | 4 | 6 | 6 | 7 | 7 | 9 |
| 8 | A1 | 5000 | C2 | 800 | KCl | 20000 | 21 | 25 | 26 | 27 | 27 | 29 |
| 9 | A1 | 5000 | C3 | 300 | — | — | 20 | 24 | 26 | 27 | 27 | 27 |
| 10 | A1 | 5000 | C3 | 300 | KCl | 20000 | 12 | 19 | 23 | 26 | 28 | 33 |
| 11 | A1 | 5000 | C4 | 250 | — | — | 28 | 30 | 31 | 31 | 31 | 34 |
| 12 | A1 | 5000 | C4 | 750 | — | — | 17 | 22 | 22 | 23 | 23 | 22 |
| 13 | A1 | 5000 | C4 | 750 | KCl | 20000 | 22 | 31 | 32 | 32 | 32 | 32 |
| 14 | A1 | 5000 | C4 | 1250 | — | — | 6 | 14 | 15 | 16 | 16 | 18 |
| 15 | A1 | 5000 | C4 | 1250 | KCl | 2000 | 18 | 31 | 33 | 33 | 33 | 33 |
| 16 | A2 | 5000 | — | — | — | — | 27 | 29 | 30 | 30 | 31 | 32 |
| 17 | A2 | 5000 | — | — | KCl | 20000 | 22 | 27 | 29 | 30 | 31 | 33 |
| 18 | A2 | 5000 | C1 | 2500 | — | — | 4 | 5 | 5 | 6 | 6 | 6 |
| 19 | A2 | 5000 | C1 | 2500 | KCl | 20000 | 6 | 24 | 28 | 31 | 33 | 34 |
| 20 | A2 | 5000 | C2 | 200 | — | — | 11 | 18 | 22 | 25 | 27 | 42 |

TABLE III Continued

| Test No. | Polymer dispersed (anionic) | | Dispersing polymer (cationic) | | Salt | | Solution apparent viscosity (centipoise @ 511 $sec^{-1}$) | | | | | |
|---|---|---|---|---|---|---|---|---|---|---|---|---|
| | Code | Conc. (PPM) | Code | Conc. (PPM) | Type | Conc. (PPM) | 1 min | 2 min | 3 min | 4 min | 5 min | 30 min |
| 21 | A2 | 5000 | C2 | 400 | — | — | 3.5 | 4 | 4 | 4 | 5 | 7 |
| 22 | A2 | 5000 | C2 | 400 | KCl | 20000 | 6.5 | 20 | 27 | 30 | — | — |
| 23 | A2 | 5000 | C3 | 300 | — | — | 17 | 23 | 25 | 27 | 31 | 38 |
| 24 | A2 | 5000 | C3 | 600 | — | — | 4 | 6 | 6 | 6 | 6 | 7 |
| 25 | A2 | 5000 | C3 | 600 | KCl | 20000 | 7 | 26 | 32 | 32 | 33 | 33 |
| 26 | A2 | 5000 | C4 | 750 | — | — | — | 6 | 13 | 15 | 16 | 18 |
| 27 | A2 | 5000 | C4 | 750 | KCl | 20000 | 18 | 25 | 30 | 32 | 32 | 33 |
| 28 | A3 | 5000 | — | — | — | — | 21 | 25 | 27 | 28 | 30 | 31 |
| 29 | A3 | 5000 | — | — | KCl | 20000 | 8 | 10 | 11 | 12 | 13 | 17 |
| 30 | A3 | 5000 | C1 | 1500 | — | — | 5 | 5 | 5 | 5 | 5 | 8 |
| 31 | A3 | 5000 | C1 | 1500 | KCl | 20000 | 8 | 17 | 17 | 17 | 17 | 17 |
| 32 | A3 | 5000 | C2 | 1200 | — | — | 6 | 6 | 6 | 6 | 6 | 4 |
| 33 | A3 | 5000 | C2 | 1200 | KCl | 20000 | 4 | 10 | 13 | 14 | 15 | 15 |
| 34 | A3 | 5000 | C3 | 1500 | — | — | 6 | 8 | 11 | 14 | 16 | 17 |
| 35 | A3 | 5000 | C3 | 1500 | KCl | 20000 | 17 | 17 | 17 | 17 | 17 | 17 |
| 36 | A3 | 5000 | C4 | 1250 | — | — | 5 | 5 | 5 | 5 | 5 | 7 |
| 37 | A3 | 5000 | C4 | 1250 | HCl | 20000 | 7 | 18 | 21 | 24 | 24 | 24 |
| 38 | A4 | 5000 | — | — | — | — | 29 | 31 | 31 | 32 | 32 | 32 |
| 39 | A4 | 5000 | — | — | KCl | 20000 | 20 | 26 | 29 | 31 | 32 | 36 |
| 40 | A4 | 5000 | C1 | 1500 | — | — | 17 | 23 | 24 | 23 | 23 | 24 |

TABLE III Continued

| Test No. | Polymer dispersed (anionic) Code | Conc. (PPM) | Dispersing polymer (cationic) Code | Conc. (PPM) | Salt Type | Conc. (PPM) | Solution apparent viscosity (centipoise @ 511 $sec^{-1}$) 1 min | 2 min | 3 min | 4 min | 5 min | 30 min |
|---|---|---|---|---|---|---|---|---|---|---|---|---|
| 41 | A4 | 5000 | C1 | 1500 | KCl | 20000 | 24 | 31 | 32 | 32 | 33 | 33 |
| 42 | A4 | 5000 | C1 | 2500 | — | — | 8 | 9 | 9 | 10 | 10 | 12 |
| 43 | A4 | 5000 | C1 | 2500 | KCl | 20000 | 12 | 36 | 37 | 38 | 38 | 38 |
| 44 | A4 | 5000 | C2 | 200 | — | — | 3 | 3 | 4 | 4 | 4 | 7 |
| 45 | A4 | 5000 | C2 | 200 | KCl | 20000 | 20 | 27 | 29 | — | — | 33 |
| 46 | A4 | 5000 | C3 | 600 | — | — | 10 | 12 | 12 | 12 | 12 | 8 |
| 47 | A4 | 5000 | C3 | 600 | KCl | 20000 | 8 | 35 | 35 | 35 | 35 | 35 |
| 48 | A4 | 5000 | C4 | 750 | — | — | 12 | 17 | 18 | 19 | 19 | 21 |
| 49 | A4 | 5000 | C4 | 750 | KCl | 20000 | 21 | 32 | 34 | 34 | 34 | 34 |
| 50 | A5 | 5000 | — | — | — | — | 22 | 27 | 27 | 28 | 28 | 32 |
| 51 | A5 | 5000 | — | — | KCl | 20000 | 14 | 17 | 19 | 21 | 21 | 22 |
| 52 | A5 | 5000 | C1 | 2500 | — | — | 8 | 9 | 9 | 9 | 10 | 12 |
| 53 | A5 | 5000 | C1 | 2500 | KCl | 20000 | 12 | 34 | 35 | 35 | 35 | 34 |
| 54 | A5 | 5000 | C2 | 800 | — | — | 4 | 4 | 4 | 4 | 4 | 4 |
| 55 | A5 | 5000 | C2 | 800 | KCl | 20000 | 4 | 25 | 29 | 31 | 31 | 32 |
| 56 | A5 | 5000 | C3 | 900 | — | — | 5 | 5 | 5 | 4 | 4 | 4 |
| 57 | A5 | 5000 | C3 | 900 | KCl | 20000 | 4 | 30 | 31 | 32 | 32 | 31 |
| 58 | A5 | 5000 | C4 | 1250 | — | — | 7 | 9 | 10 | 10 | 10 | 11 |
| 59 | A5 | 5000 | C4 | 1250 | KCl | 20000 | 11 | 25 | 25 | 25 | 25 | 25 |
| 60 | A6 | 5000 | — | — | — | — | 23 | 28 | 28 | 35 | 38 | 43 |

TABLE III Continued

| Test No. | Polymer dispersed (anionic) Code | Conc. (PPM) | Dispersing polymer (cationic) Code | Conc. (PPM) | Salt Type | Conc. (PPM) | Solution apparent viscosity (centipoise @ 511 $sec^{-1}$) 1 min | 2 min | 3 min | 4 min | 5 min | 30 min |
|---|---|---|---|---|---|---|---|---|---|---|---|---|
| 61 | A6 | 5000 | — | — | KCl | 20000 | 9 | 11 | 13 | 16 | 18 | 23 |
| 62 | A6 | 5000 | C1 | 250 | — | — | 11 | 21 | 31 | 40 | 43 | 42 |
| 63 | A6 | 5000 | C1 | 500 | — | — | 6 | 6 | 8 | 10 | 10 | 16 |
| 64 | A6 | 5000 | C1 | 500 | KCl | 20000 | 16 | 17 | 17 | 18 | 18 | 18 |
| 65 | A6 | 5000 | C2 | 200 | KCl | 20000 | 5 | 8 | 10 | 12 | 13 | 25 |
| 66 | A6 | 5000 | C3 | 600 | — | — | 6 | 8 | 9 | 9 | 8 | 8 |
| 67 | A6 | 5000 | C3 | 600 | KCl | 20000 | 8 | 15 | 16 | 17 | 17 | 19 |
| 68 | A6 | 5000 | C4 | 250 | — | — | 8 | 10 | 16 | 17 | 18 | 30 |
| 69 | A6 | 5000 | C4 | 250 | KCl | 20000 | 21 | 23 | 23 | 23 | 23 | 23 |
| 70 | A7 | 5000 | — | — | — | — | 34 | 41 | 42 | 45 | 51 | 52 |
| 71 | A7 | 5000 | — | — | KCl | 20000 | 9 | 10 | 10 | 11 | 12 | 14 |
| 72 | A7 | 5000 | C1 | 250 | — | — | 10 | 21 | 31 | 40 | 43 | 42 |
| 73 | A7 | 5000 | C1 | 250 | KCl | 20000 | 25 | 26 | 21 | 21 | 21 | 21 |
| 74 | A7 | 5000 | C1 | 500 | — | — | 6 | 8 | 8 | 8 | 8 | 8 |
| 75 | A7 | 5000 | C1 | 500 | KCl | 20000 | 8 | 18 | 19 | 19 | 18 | 19 |
| 76 | A7 | 5000 | C2 | 300 | — | — | 13 | 7 | 8 | 8 | 10 | 11 |
| 77 | A7 | 5000 | C2 | 300 | KCl | 20000 | 10 | 11 | 10 | 10 | 10 | 10 |
| 78 | A7 | 5000 | C3 | 300 | — | — | 6 | 7 | 7 | 7 | 7 | 6 |
| 79 | A7 | 5000 | C3 | 300 | KCl | 20000 | 15 | 15 | 16 | 16 | 16 | 16 |
| 80 | A7 | 5000 | C4 | 125 | — | — | 5 | 5 | 7 | 7 | 6 | 7 |
| 81 | A7 | 5000 | C4 | 125 | KCl | 20000 | 7 | 16 | 16 | 17 | 17 | 18 |

Example II

In these tests, the anionic polymer was initially hydrated in deionized water. An aliquot of cationic polymer was added to the hydrated anionic polymer, and the anionic polymer was precipitated from solution. The Viscosity of the solution was measured with a Fann Model 35 Viscometer at 300 rpm. and 76°F (24.4°C). The viscometer was equipped with a No. 1 spring and fitted with a standard bob and sleeve.

Salt was added to the solution allowing the anionic polymer to rehydrate and a viscosity was taken 30 minutes after salt addition. The results of these tests are shown in Table IV.

TABLE IV

| Test | Anionic polymer | | Cationic polymer | | Salt | | Solution apparent viscosity (centipoise @ 511 $sec^{-1}$) | |
|---|---|---|---|---|---|---|---|---|
| No. | Type | PPM | Type | PPM | Type | PPM | Before salt | After salt |
| 1 | A4 | 4800 | C3 | 1600 | KCl | 4800 | 1.0 | 1.0 |
| 2 | A4 | 4800 | C3 | 1600 | KCl | 10800 | 1.0 | 39.5 |
| 3 | A4 | 4800 | C3 | 1600 | NaCl | 3600 | 1.0 | 1.0 |
| 4 | A4 | 4800 | C3 | 1600 | NaCl | 9600 | 1.0 | 37.0 |
| 5 | A4 | 4800 | C3 | 1600 | $CaCl_2$ | 2400 | 1.0 | 1.0 |
| 6 | A4 | 4800 | C3 | 1600 | $CaCl_2$ | 7200 | 1.0 | 36.0 |
| 7 | A4 | 4800 | C2 | 1600 | KCl | 10800 | 1.0 | 39.0 |
| 8 | A4 | 10800 | C2 | 1600 | KCl | 10800 | 7.0 | 125.0 |

**Claims**

1. A water soluble anionic polymer composition comprising:

(a) at least one anionic polymer having a molecular weight sufficient to thicken water and selected from gum karaya, gum tragacanth, gum ghatti, gum acacia, psyllium, carrageenin, carboxyalkyl guar, carboxyalkyl hydroxyalkyl guar, carboxyalkyl cellulose, carboxyalkyl hydroxyalkyl cellulose, the said alkyl groups having from 1 to about 3 carbon atoms, polyacrylamide, polyacrylate, acrylamide-acrylate copolymers, and xanthan gum; and,

(b) at least one cationic or amphoteric polymer selected from poly(diallyldimethylammonium chloride) and polymers having repeating monomer units of one or more of the following formulae I, II and III:

I. 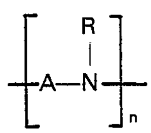

wherein

R is hydrogen or an alkyl of 1 to about 3 carbon atoms;

A is alkylene having 2 to 4 carbon atoms or a hydroxyalkylene having 2 to 4 carbon atoms;

n is an integer equal to the number of monomer units of said polymer required to give the polymer a molecular weight of at least 1,000;

II. 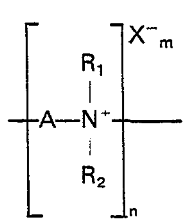

wherein

$R_1$ and $R_2$ are independently hydrogen or an alkyl having from 1 to about 3 carbon atoms;

A is alkylene having 2 to 4 carbon atoms or a hydroxyalkylene having 2 to 4 carbon atoms;

X is halogen, sulfate, hydroxyl, or methyl sulfate;

m is an integer equal to the number of anions required to maintain electronic neutrality; and,

n is an integer equal to the number of monomer units of said polymer required to give the polymer a molecular weight of at least 1,000;

III.

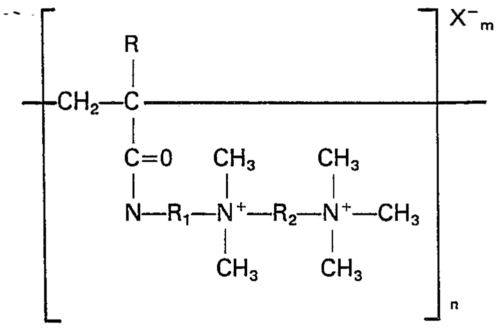

wherein

R is hydrogen or methyl;

$R_1$ is alkylene having from about 2 to about 5 carbon atoms;

$R_2$ is unsubstituted alkylene having from about 2 to about 6 carbon atoms, or substituted alkylene having from about 2 to about 6 carbon atoms and containing a hydroxyl group or from 1 to about 3 ether groups;

X is an anion selected from chlorine, bromine, iodine, sulfate, hydroxyl, and methyl sulfate;

m is an integer equal to the number of anions required to maintain electronic neutrality; and

n is an integer equal to the number of monomer units of said polymer required to give the polymer a molecular weight of at least 1,000;

said cationic or amphoteric polymer being present in the range of from about 1 to about 25 percent by weight of said anionic polymer.

2. A water soluble anionic polymer composition comprising:

(a) at least one anionic polymer having a molecular weight sufficient to thicken water and selected from gum karaya, gum tragacanth, gum ghatti, gum acacia, psyllium, carrageenin, carboxyalkyl guar, carboxyalkyl hydroxyalkyl guar, carboxyalkyl cellulose, carboxyalkyl hydroxyalkyl cellulose, the said alkyl groups have from 1 to about 3 carbon atoms, polyacrylamide, polyacrylate, acrylamide-acrylate copolymers and xanthan gum;

(b) at least one cationic or amphoteric polymer, present in the range of from about 1 to about 75 percent by weight of said anionic polymer and selected from poly(diallyldimethylammonium chloride) and polymers having repeating monomer units of one or more of the following formulae I, II and III:

I.

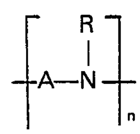

wherein

R is hydrogen or alkyl having from 1 to about 3 carbon atoms;

A is alkylene having 2 to 4 carbon atoms or a hydroxyalkylene having 2 to 4 carbon atoms;

n is an integer equal to the number of monomer units of said polymer required to give the polymer a molecular weight of at least 1,000;

II.

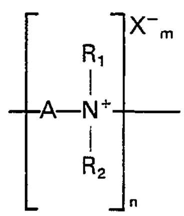

wherein

$R_1$ and $R_2$ are independently hydrogen or alkyl having from 1 to about 3 carbon atoms;

A is alkylene having 2 to 4 carbon atoms and a hydroxyalkylene having 2 to 4 carbon atoms;

X is halogen, sulfate, hydroxyl, or methyl sulfate;

m is an integer equal to the number of anions required to maintain electronic neutrality; and

n is an integer equal to the number of monomer units of said polymer required to give the polymer a molecular weight of at least 1,000;

III. 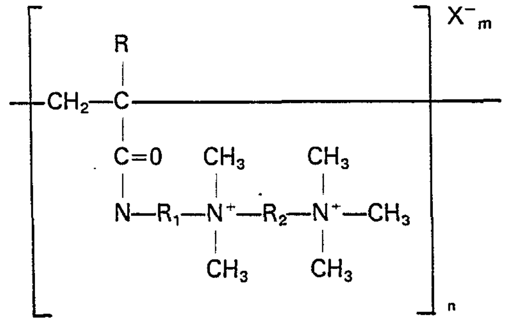

wherein

R is hydrogen or methyl;

$R_1$ is alkylene having from about 2 to about 5 carbon atoms, preferably propylene;

$R_2$ is unsubstituted alkylene having from about 2 to about 6 carbon atoms, or substituted alkylene having from about 2 to about 6 carbon atoms, and containing a hydroxyl group or from about 1 to about 3 ether groups;

X is an anion selected from chlorine, bromine, iodine, sulfate, hydroxyl, and methyl sulfate;

m is an integer equal to the number of anions required to maintain electronic neutrality; and

n is an integer equal to the number of monomer units of said polymer required to give the polymer a molecular weight of at least 1,000; and

(c) one or more salts selected from alkali metal halides, alkaline earth metal halides, zinc halides, and ammonium halides.

3. A composition according to claim 2, which contains one or more of the following said salts: sodium chloride, potassium chloride, sodium fluoride, sodium bromide, calcium chloride, barium chloride, lithium chloride and ammonium chloride.

4. A composition according to claim 1, 2 or 3, which contains one or more of the following cationic or amphoteric polymers: poly(ethyleneamine), poly(propyleneamine), poly(ethyl-1-N-methylamine), poly(ethyl-1,1-N-methylammonium chloride), poly(2-hydroxypropyl-1,1-N-dimethylammonium chloride), poly(diallyldimethylammonium chloride), poly(methacrylamido-4,4,8,8-tetramethyl-4,8-diaza-6-hydroxy-nonamethylene chloride).

5. A method of acidizing a subterranean formation comprising contacting said formation with an acidic liquid, said acidic liquid comprising an acid, water, and a composition as claimed in any of claims 1 to 4, said composition being present in sufficient quantity to thicken said liquid.

6. A method of fracturing a subterranean formation comprising contacting said formation, under a pressure sufficient to fracture said formation, with an aqueous liquid containing a composition as claimed in any of claims 1 to 4, said composition being present in sufficient quantity to thicken said liquid.

**Patentansprüche**

1. Eine wasserlösliche Zusammensetzung mit wenigstens einem anionischen Polymeren, enthaltend

(a) wenigstens ein anionisches Polymer mit einem zur Verdickung von Wasser ausreichenden Molekulargewicht und das ausgewält ist aus der Gruppe Sterkuliengummi, Traganthgummi, Ghattigummi, Akaziengummi, Psyllium, Karragenin, Carboxyalkylguar, Carboxyalkylhydroxyalkylguar, Carboxyalkylzellulose, Carboxyalkylhydroxyalkylzellulose, wobei die Alkylgruppen 1 bis 3 Kohlenstoffatome enthalten, Polyacrylamid, Polyacrylat, Acrylamid-Acrylat Copolymere, Xanthangummi;

(b) wenigstens ein kationisches oder amphoteres Polymer, das ausgewählt ist aus der Gruppe Polydiallyldimethylammoniumchlorid und Polymeren mit Monomer-Repetiereinheiten nach einer oder mehr als einer der nachfolgenden Formeln I, II und III:

I. 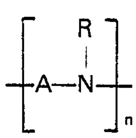

worin

R Wasserstoff oder eine Alkylgruppe mit 1 bis 3 Kohlenstoffatomen ist;

A eine Alkylengruppe mit 2 bis 4 Kohlenstoffatomen oder eine Hydroxyalkylengruppe mit 2 bis 4 Kohlenstoffatomen ist;

n eine ganze Zahl gleich der Anzahl von Monomereinheiten des Polymeren ist und ein Polymer mit einem Molekulargewicht von wenigstens 1000 ergibt:

II. 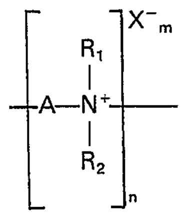

worin

$R_1$ und $R_2$ unabhängig voneinander Wasserstoff oder Alkylgruppen mit 1 bis 3 Kohlenstoffatomen sind;

A eine Alkylengruppe mit 2 bis 4 Kohlenstoffatomen oder eine Hydroxyalkylengruppe mit 2 bis 4 Kohlenstoffatomen ist;

X ein Halogen, Sulfat, Hydroxyl oder Methylsulfat ist;

m eine ganze Zahl gleich der Anzahl von Anionen zur Aufrechterhaltung der elektronischen Neutralität ist; und

n eine ganze Zahl gleich der Anzahl von Monomereinheiten des Polymeren ist und ein Polymer mit einem Molekulargewicht von wenigstens 1000 ergibt;

III. 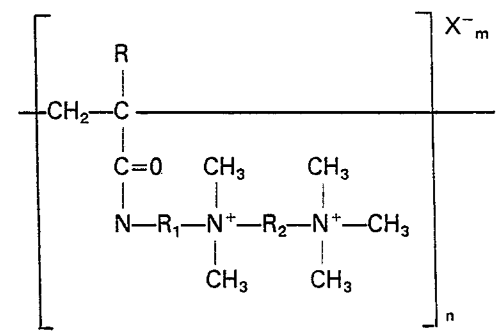

worin

R Wasserstoff oder Methyl ist;

$R_1$ eine Alkylengruppe mit 2 bis 5 Kohlenstoffatomen ist;

$R_2$ eine unsubstituierte Alkylengruppe mit 2 bis 6 Kohlenstoffatomen oder eine substituierte Alkylengruppe ist, die 2 bis 6 Kohlenstoffatome und eine Hydroxylgruppe oder 1 bis 3 Ethergruppen ethält;

X ein Anion aus der Gruppe Chlor, Brom, Jod, Sulfat, Hydroxyl und Methylsulfat ist;

m eine ganze Zahl gleich der Anzahl von Anionen zur Aufrechterhaltung der elektronischen Neutralität ist; und

n eine ganze Zahl gleich der Anzahl von Monomereinheiten des Polymeren ist und ein Polymer mit einem Molekulargewicht von wenigstens 1000 ergibt;

wobei das kationische oder amphotere Polymere in einer Menge im Bereich von ca. 1 bis ca. 25 Gew.-% bezogen auf das Gewicht des anionischen Polymeren vorhanden ist.

2. Eine wasserlösliche Zusammensetzung mit wenigstens einem anionischen Polymeren, enthaltend

(a) wenigstens ein anionisches Polymer mit einem zur Verdickung von Wasser ausreichenden Molekulargewicht und das ausgewählt ist aus der Gruppe Sterkuliengummi, Traganthgummi, Ghattigummi, Akaziengummi, Psyllium, Karragenin, Carboxyalkylguar, Carboxyalkylhydroxyalkylguar, Carboxyalkylzellulose, Carboxyalkylhydroxyalkylzellulose, wobei die Alkylgruppen 1 bis 3 Kohlenstoffatome enthalten, Polyacrylamid, Polyacrylat, Acrylamid-Acrylat Copolymere, Xanthangummi;

(b) wenigstens ein kationisches oder amphoteres Polymer, das in einer Menge im Bereich von ca. 1 bis ca. 75 Gew.-% bezogen auf das Gewicht des anionischen Polymeren vorhanden und ausgwählt ist aus der Gruppe Polydiallyldimethylammoniumchlorid und Polymeren mit Monomer-Repetiereinheiten nach einer oder mehr als einer der nachfolgenden Formeln I, II und III:

I. 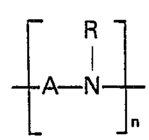

worin

R Wasserstoff oder eine Alkylgruppe mit 1 bis 3 Kohlenstoffatomen ist;

A eine Alkylengruppe mit 2 bis 4 Kohlenstoffatomen oder eine Hydroxyalkylengruppe mit 2 bis 4 Kohlenstoffatomen ist;

n eine ganze Zahl gleich der Anzahl von Monomereinheiten des Polymeren ist und ein Polymer mit einem Molekulargewicht von wenigstens 1000 ergibt;

II.

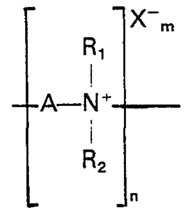

worin

$R_1$ und $R_2$ unabhängig voneinander Wasserstoff oder Alkylgruppen mit 1 bis 3 Kohlenstoffatomen sind;

A eine Alkylengruppe mit 2 bis 4 Kohlenstoffatomen oder eine Hydroxyalkylengruppe mit 2 bis 4 Kohlenstoffatomen ist;

X ein Halogen, Sulfat, Hydroxyl oder Methylsulfat ist;

m eine ganze Zahl gleich der Anzahl von Anionen zur Aufrechterhaltung der elektronischen Neutralität ist; und

n eine ganze Zahl gleich der Anzahl von Monomereinheiten des Polymeren ist und ein Polymer mit einem Molekulargewicht von wenigstens 1000 ergibt;

III.

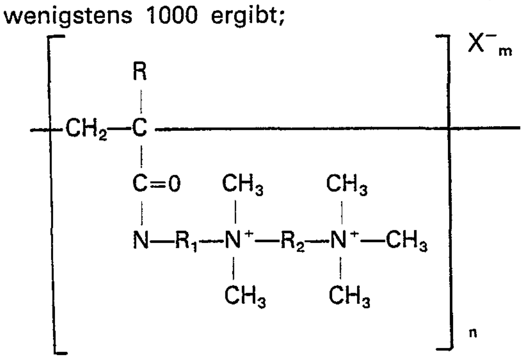

worin

R Wasserstoff oder Methyl ist;

$R_1$ eine Alkylengruppe mit 2 bis 5 Kohlenstoffatomen, vorzugsweise eine Propylengruppe, ist;

$R_2$ eine unsubstituierte Alkylengruppe mit 2 bis 6 Kohlenstoffatomen oder eine substituierte Alkylengruppe ist, die 2 bis 6 Kohlenstoffatome und eine Hydroxylgruppe oder 1 bis 3 Ethergruppen enthält;

X ein Anion aus der Gruppe Chlor, Brom, Jod, Sulfat, Hydroxyl und Methylsulfat ist;

m eine ganze Zahl gleich der Anzahl von Anionen zur Aufrechterhaltung der elektronischen Neutralität ist; und

n eine ganze Zahl gleich der Anzahl von Monomereinheiten des Polymeren ist und ein Polymer mit einem Molekulargewicht von wenigstens 1000 ergibt; und

c) ein Salz oder mehrere Salze aus der Gruppe Alkalihalogenide, Erdalkalihalogenide, Zinkhalogenide, Ammoniumhalogenide.

3. Zusammensetzung nach Anspruch 2, dadurch gekennzeichnet, daß ein Salz oder mehrere Salze der nachfolgend aufgeführten Salze enthalten sind: Natriumchlorid, Kaliumchlorid, Natriumfluorid, Natriumbromid, Calciumchlorid, Bariumchlorid, Lithiumchlorid, Ammoniumchlorid.

4. Zusammensetzung nach Anspruch 1, 2 oder 3, dadurch gekennzeichnet, daß darin ein Polymer oder mehrere Polymere der nachfolgend aufgeführten kationischen oder amphoteren Polymeren enthalten sind: Polyethylenamin, Polypropylenamin, Polyethyl-1-N-methylamin, Polyethyl-1,1-N-methylammoniumchlorid, Poly-(2-hydroxy)propyl-1,1-N-dimethylammoniumchlorid, Polydiallyldimethylammoniumchlorid, Polymethacrylamido-4,4,8,8-tetramethyl-4,8-diaza-6-hydroxynonamethylchlorid.

5. Verfahren zur Säurebehandlung einer unterirdischen Formation, bei dem die Formation mit einer sauren Flüssigkeit in Berührung gebracht wird, die eine Säure, Wasser und eine Zusammensetzung nach einem der Ansprüche 1 bis 4 in einer Menge enthält, die zur Verdickung der Flüssigkeit ausreicht.

6. Verfahren zur Spaltbildung in einer unterirdischen Formation, bei dem die Formation unter einem zur Spaltbildung ausreichenden Druck mit einer wäßrigen Flüssigkeit in Berührung gebracht wird, die eine Zusammensetzung nach einem der Ansprüche 1 bis 4 in einer Menge enthält, die zur Verdickung der Flüssigkeit ausreicht.

## Revendications

1. Composition de polymère anionique soluble dans l'eau comprenant:

(a) au moins un polymère anionique ayant un poids moléculaire suffisant pour épaissir l'eau et choisi parmi le karaya, la gomme adragante, la gomme de ghatti, la gomme d'acacia, le psyllium, la carragheenine, un carboxyalkylguar, un carboxyalkylhydroxyalkylguar, une carboxyalkylcellulose, une

carboxyalkylhydroxyalkylcellulose, ces groupes alkyle ayant 1 à environ 3 atomes de carbone, le polyacrylamide, le polyacrylate des copolymères acrylamide-acrylate, et la gomme de xanthane; et

(b) au moins un polymère cationique ou amphotère choisi parmi le poly(chlorure de diallyldiméthylammonium) et les polymères comportant des motifs monomères répétés ayant une ou plusieurs des formules suivantes I, II et III:

I 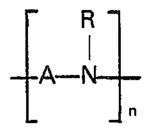

dans laquelle:

R est un atome d'hydrogène ou un groupe alkyle ayant 1 à environ 3 atomes de carbone;

A est un groupe alkylène ayant 2 à 4 atomes de carbone ou un groupe hydroxyalkylène ayant 2 à 4 atomes de carbone;

n est un nombre entier égal au nombre de motifs monomères du polymère nécessaires pour donner au polymère un poids moléculaire d'au moins 1000;

II 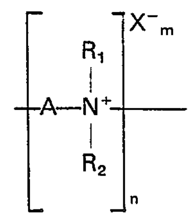

dans laquelle:

$R_1$ et $R_2$ sont, indépendamment, un atome d'hydrogène ou un groupe alkyle ayant 1 à environ 3 atomes de carbone;

A est un groupe alkylène ayant 2 à 4 atomes de carbone ou un groupe hydroxyalkylène ayant 2 à 4 atomes de carbone;

X est un halogène, un groupe sulfate, hydroxyle ou méthylsulfate;

m est un nombre entier égal au nombre d'anions nécessaires pour maintenir la neutralité électronique; et

n est un nombre entier égal au nombre de motifs monomères du polymère nécessaire pour donner au polymère un poids moléculaire d'au moins 1000;

III 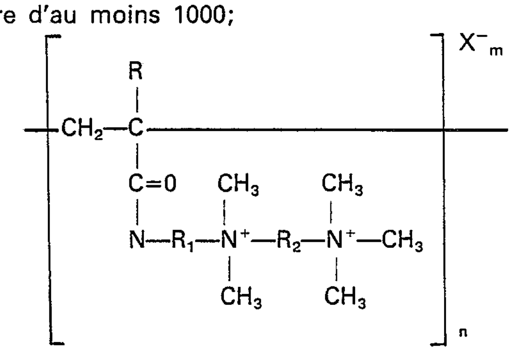

dans laquelle:

R est un atome d'hydrogène ou un groupe méthyle;

$R_1$ est un groupe alkylène ayant environ 2 à environ 5 atomes de carbone;

$R_2$ est un groupe alkylène non substitué ayant environ 2 à environ 6 atomes de carbone ou un groupe alkylène substitué ayant environ 2 à environ 6 atomes de carbone et comportant un groupe hydroxyle ou 1 à environ 3 groupes éther;

X est un anion choisi parmi chlore, brome, iode, sulfate, hydroxyle et méthylsulfate;

m est un nombre entier égal au nombre d'anions nécessaires pour maintenir la neutralité électronique; et

n est un nombre entier égal au nombre de motifs monomères du polymère nécessaires pour donner au polymère un poids moléculaire d'au moins 1000;

ce polymère cationique ou amphotère étant présent en quantités allant d'environ 1 à environ 25% en poids par rapport au polymère anionique.

2. Composition de polymères anioniques soluble dans l'eau comprenant:

(a) au moins un polymère anionique ayant un poids moléculaire suffisant pour épaissir l'eau et choisi parmi le karaya, la gomme adragante, la gomme de ghatti, la gomme d'acacia, le psyllium, la carragheenine, un carboxyalkylguar, un carboxyalkylhydroxyalkylguar, une carboxyalkylcellulose, une

carboxyalkylhydroxyalkylcellulose, ces groupes alkyle ayant 1 à environ 3 atomes de carbone, le polyacrylamide, le polyacrylate, des copolymères acrylamide-acrylate, et la gomme de xanthane;

(b) au moins un polymère cationique ou amphotère choisi parmi le poly(chlorure de diallyldiméthylammonium) et les polymères comportant des motifs monomères répétés ayant une ou plusieurs des formules suivantes I, II et III:

I

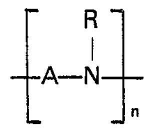

dans laquelle:

R est un atome d'hydrogène ou un groupe alkyle ayant 1 à environ 3 atomes de carbone;

A est un groupe alkylène ayant 2 à 4 atomes de carbone ou un groupe hydroxyalkylène ayant 2 à 4 atomes de carbone;

n est un nombre entier égal au nombre de motifs monomères du polymère nécessaires pour donner au polymère un poids moléculaire d'au moins 1000;

II

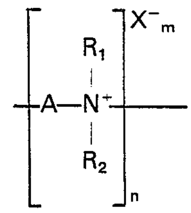

dans laquelle:

$R_1$ et $R_2$ sont, indépendamment, un atome d'hydrogène ou un groupe alkyle ayant 1 à environ 3 atomes de carbone;

A est un groupe alkylène ayant 2 à 4 atomes de carbone ou un groupe hydroxyalkylène ayant 2 à 4 atomes de carbone;

X est un halogène, un groupe sulfate, hydroxyle ou méthylsulfate;

m est un nombre entier égal au nombre d'anions nécessaires pour maintenir la neutralité électronique; et

n est un nombre entier égal au nombre de motifs monomères du polymère nécessaires pour donner au polymère un poids moléculaire d'au moins 1000;

III

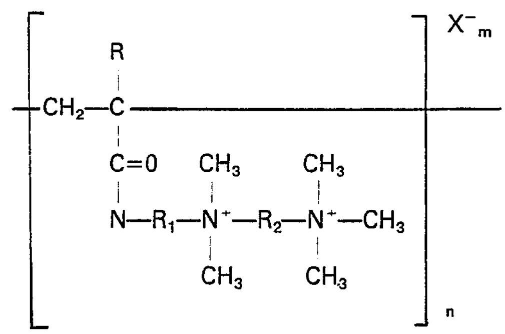

dans laquelle:

R est un atome d'hydrogène ou un groupe méthyle;

$R_1$ est un groupe alkylène ayant environ 2 à environ 5 atomes de carbone;

$R_2$ est un groupe alkylène non substitué ayant environ 2 à environ 6 atomes de carbone ou un groupe alkylène substitué ayant environ 2 à environ 6 atomes de carbone et comportant un groupe hydroxyle ou 1 à environ 3 groupes éther;

X est un anion choisi parmi chlore, brome, iode, sulfate, hydroxyle et méthylsulfate;

m est un nombre entier égal au nombre d'anions nécessaires pour maintenir la neutralité électronique; et

n est un nombre entier égal au nombre de motifs monomères du polymère nécessaires pour donner au polymère un poids moléculaire d'au moins 1000; et

(c) un ou plusieurs sels choisis parmi les halogénures de métaux alcalins, les halogénures de métaux alcalinoterreux, les halogénures de zinc et les halogénures d'ammonium.

3. Composition suivant la revendication 2, qui contient un ou plusieurs des sels suivants: chlorure de sodium, chlorure de potassium, fluorure de sodium, bromure de sodium, chlorure de calcium, chlorure de baryum, chlorure de lithium et chlorure d'ammonium.

4. Composition selon la revendication 1, 2 ou 3, contenant un ou plusieurs des polymères cationiques ou amphotères suivants: poly(éthylèneamine), poly(propylèneamine), poly(éthyl-1-N-méthylamine), poly(chlorure d'éthyl-1,1-N-méthylammonium), poly(chlorure de 2-hydroxypropyl-1,1-N-diméthylammonium), poly(chlorure de diallyldiméthylammonium), poly(dichlorure de méthacrylamido-4,4,8,8-tétraméthyl-4,8-diaza-6-hydroxy-nonaméthylène).

5. Procédé d'acidification d'une formation souterraine comprenant la mise en contact de cette formation avec un liquide acide, ce liquide acide comprenant un acide, de l'eau, et une composition selon l'une quelconque des revendications 1 à 4, cette composition étant présente en quantité suffisante pour épaissir le liquide.

6. Procédé de fracturation d'une formation souterraine comprenant la mise en contact de cette formation, sous une pression suffisante pour fracturer ladite formation, avec un liquide aqueux contenant une composition selon l'une quelconque des revendications 1 à 4, cette composition étant présente en quantité suffisante pour épaissir le liquide.